# NEUE EUROPÄISCHE PATENTSCHRIFT

(11) **EP 0 976 873 B2**
(45) Veröffentlichungstag und Bekanntmachung des Hinweises auf die Entscheidung über den Einspruch: **16.12.2009**
(45) Hinweis auf die Patenterteilung: 09.02.2005
(21) Anmeldenummer: 98115218.4
(22) Anmeldetag: 13.08.1998
(51) Int. Cl.: E02D 5/80

(54) **Injektions- oder Verpresskörper**
Injection- or prestressed ground anchor
Ancrage d'injection ou précontrainte

(30) Priorität: 16.08.1997 DE 19735457
(43) Veröffentlichungstag der Anmeldung: 02.02.2000
(73) Patentinhaber: INTERNATIONAL INTEC PATENT HOLDING ESTABLISHMENT, 9490 Vaduz (LI)
(72) Erfinder: Sobek, Peter Dipl.-Ing., 63322 Rödermark (DE)
(74) Vertreter: Radwer, Dieter

(56) Entgegenhaltungen:
- EP-A- 0 080 196
- EP-A- 0 330 114
- CH-A- 615 245
- DE-A- 2 926 155
- DE-A- 3 726 191
- DE-A- 4 112 128
- US-A- 5 216 857

## Beschreibung

Die Erfindung bezieht sich auf einen Verpreßkörper zur Nachbewehrung von historischen Bauten und zur Verteilung von mechanischen Spannungen, einzusetzen in Bohrungen, Schlitze oder dergleichen Öffnungen, mit einem zentral angeordneten Füllschlauch und mindestens einem diesen Füllschlauch umgebenden Gewebestrumpf.

Zur Befestigung von Bauwerkteilen an unsicheren Untergründen, zur Sanierung von Bauwerken und zur Absicherung von Gebäuden, welche durch Bergschäden gefährdet sind, werden sogenannte Injektions- oder Verpreßanker verwendet. Hierbei handelt es sich nach der DIN 4125 um Bauteile, bei denen durch Einpressen von Verpreßmörtel um den hinteren Teil eines in den Baugrund eingebrachten Stahlzuggliedes ein Verpreßanker hergestellt wird, der über Stahlzugglieder und Ankerkopf mit dem zu verankernden Bauteil oder Gebirgsteil verbunden wird.

Ein weiteres großes Anwendungsgebiet ist die Verankerung schadhafter Mauerwerks- oder Betonteile im Hochbau, Brückenbau oder Tiefbau. Ferner werden Injektions- oder Verpreßanker auch im Tunnelbau zur Verankerung der Tunnel-Innenschalen, zur Streckensohlenverfestigung und zur Vernadelung des Hangendes im Bergbau eingesetzt. Solche Verpreßanker sind beispielsweise in der DIN 4125 und 4128 aufgeführt.

Aus der EP-A-0 080196 geht ein in ein vorgebohrtes Loch einzusetzender Injektionsanker mit einem zentral angeordneten Verankerungsbolzen hervor, der von einem Schlauch aus flexiblem Material eng umschlossen ist. Dieser Verankerungsbolzen, der als massiver Bolzen ausgebildet ist, kann durch Schmieden aufwendig bearbeitet werden. Der Injektionsanker läßt sich somit nur fabrikmäßig herstellen. Eine Anpassung an spezifische Gegebenheiten, wie beispielsweise einer geänderten Last- oder Momentabtragung, ist an der Baustelle nicht möglich.

Sollen in bestimmten Bereichen über definierte Längen bzw. Bohrlochtiefen erhöhte Last- oder Momentabtragungen erfolgen, so sind die bekannten Injektions- oder Verpreßanker hierfür nicht oder nicht besonders geeignet. Die bekannten Injektionsoder Verpreßanker werden fabrikmäßig hergestellt, so daß die Bohrlochtiefen aus denen spezielle Spannungs- oder Lastabtragungen erfolgen sollen, bei der Ankerherstellung bekannt sein müssen, was jedoch erhebliche Produktionsprobleme aufwirft, da es sich hierbei um Sonderanfertigungen handelt. Eine fabrikmäßig Massenfertigung läßt sich dann nicht durchführen.

Der Erf indung liegt die Aufgabe zugrunde, einen Verpreßkörper zu schaffen, welcher den Erfordernissen vor Ort d.h. auf der Baustelle, entsprechend angepaßt und in einfacher Weise zusammengestellt, montiert und unmittelbar eingesetzt werden kann.

Die Lösung dieser Aufgabe erfolgt durch die Merkmale des Anspruches 1.
Ein solcher Verpreßkörper besteht danach aus wenigen konventionellen Elementen, die sich leicht auf der Baustelle montieren und den örtlichen Gegebenheiten anpassen lassen. Sowohl die Verpreßkörperlänge als auch die Anpassung an die zu erwartende Spannungs- bzw. Lastabtragung lassen sich in einfacher Weise auf der Baustelle, beispielsweise durch die Auswahl der Anzahl und Querschnitte der zu verwendenden Bewehrungselemente, herstellen.

Die Maschen des Gewebestrumpfes sind dabei derartig ausgelegt, daß nur ein geringer Teil des Füllgutes radial austreten kann, wodurch sich dieser aufweitet und die Bewehrungselemente in vorteilhafter Weise an den äußeren Umfang gedrängt werden.

In Weiterbildung der Erfindung sind entlang der Längachse des Verpreßkörpers außerhalb des innenliegenden Füllschlauchs vorteilhaft die Bewehrungselemente angeordnet, welche mit dem Gewebe des Strumpfes punktuell verbunden sind, derart daß eine Lagefixierung der Bewehrungselemente nach der Füllung des Verpreßkörpers gewährleistet ist.

Nach der Erfindung ist der Füllschlauch und/oder der Gewebestrumpf dehnbar ausgebildet, so daß eine Anpasssung an das Bohrloch gegeben ist, welches nach den abzutragenden Lasten oder zu verlagernden Spannungen ausgelegt werden muß. Hierdurch ergibt sich mit den gleichen Grundelementen ein großer Spielraum für eine Anpassung des Verpreßkörpers.

In einer anderen Ausführungsform der Erfindung ist der Füllschlauch und/oder der Gewebestrumpf mindestens abschnittsweise als Metallgewirk ausgebildet, wodurch die Einsatzmöglichkeiten erheblich erweitert werden. Das Gewirk ist dabei beispielsweise aus sehr dünnen Drähten oder Metallfäden gebildet, die durch ihre Schlingenlage eine Ausdehnungsmöglichkeit bis zu 20% des Strumpfumfangs aufweisen.

Der innen zentralliegende Füllschlauch ist in vorteilhafter Weise geringfügig kürzer als die Bewehrungselemente ausgebildet, so daß das Füllgut bis zum Ende des Füllschlauchs fließt, dort ungestört austritt und innerhalb des außen liegenden Gewebestrumpfes, welcher an seinem unteren Ende geschlossen ist, zurückfließt bis es im Bereich des Einfülleingangs aus dem Bohrloch quillt, wodurch angezeigt wird, daß die Füllung des Verpreßkörpers erfolgreich beendet ist.

In einer weiteren Variante der Erfindung sind die Bewehrungselemente U-förmig ausgebildet, wobei ihre gebogenen Teile vorzugsweise an einem Ende des Verpreßkörpers angeordnet sind. Die Bewehrungselemente des Verpreßkörpers liegen in seinem Umfangsbereich. Weitere Vorteile dieser Variante bestehen darin, daß die Ausreißfestigkeit eines solchen Bündels von Bewehrungselementen wesentlich verbessert ist.

Zur weiteren Erhöhung der Ausreißfestigkeit sind die Bewehrungselemente mindestens teilweise über mindestens einen Teil ihrer Länge verformt ausgebildet.

Eine andere Variante besteht darin, daß jedes Bewehrungselement eine Gruppe von Drähten und/oder Stangen und/oder - Rohren an vorbestimmten Stellen über eine vorgegebene Länge zur Spannungsverlagerung oder Last- und/oder Momentabtragung aus definierten Zonen Verformungen aufweist. Sollen beispielsweise Last- oder Momentabtragungen in bestimmten hinterbeinanderliegenden Bereichen unterschiedlicher Größe erfolgen, so können für jeden Bereich Drähte, Rohre oder Stangen ausgewählt werden, deren Stärke und Anzahl entsprechend der Last- oder Momentabtragung festgelegt wird, wobei ein Draht- oder Stangenbündel für die Lastabtragung aus einem einzigen Bereich zusammengestellt wird, während ein anderes Bündel von Drähten, Rohre oder Stangen die Last- oder Momentabtragung aus einem anderen Bereich übernimmt. Diese Lösung hat nach der Erfindung den großen Vorteil, daß die Zugfestigkeit eines Draht-, Rohroder Stangenbündels entsprechend den Erfordernissen ausgelegt und voll ausgenutzt werden kann, wobei diesem Draht- oder Stabbündel keine weiteren Lasten aufgeprägt werden. Damit werden auch die einzelnen Lastbereiche untereinander nicht beeinflußt und ein einziger Verpreßkörper kann damit Lasten oder Momente aus verschiedenen Bereichen unabhängig von anderen Bereichen verlagern oder übertragen.

Zur Erhöhung der Ausreißfestigkeit sind die Bewehrungselemente wie beispielsweise die Drähte und/oder Stangen und/oder Rohre gewellt, ähnlich einer Haarnadel, und/oder verdrillt, wobei die Verformungen vorzugsweise an den Stellen und in den Bereichen vorgesehen sind, in denen die einzelnen Lasten oder Momente auftreten. Vorteilhaft kann hier noch zusätzlich Stahl- oder Glaswolle eingedrillt werden.

Der Verpreßkörper nach der Erfindung ermöglicht auch eine Verbesserung des Füllvorgangs indem eine mit den Bewehrungselementen verbundene Endplatte oder ein Adapter am Kopf des Verpreßkörpers vorgesehen ist, welche mit einer Rüttelvorrichtung verbindbar ist, derart, daß die erzeugten mechanischen Schwingungen auf die Bewehrungselemente übertragbar sind.

Damit kann Schwingungsenergie in alle Bereiche des Verpreßkörpers gebracht werden, so daß auch die Fließfähigkeit des Füllgutes verbessert wird. Mit Hilfe dieser Maßnahme können die Verpreßkörper in erheblichen Längen hergestellt werden, ohne daß Probleme bei der Einbringung des Füllgutes auftreten. Es lassen sich damit Verpreßkörperlängen in der Größenordnung von 50 m und mehr herstellen. Hierbei wirkt sich auch der Vorteil aus, daß derartige Verpreßkörper vor Ort, d.h. auf der Baustelle hergestellt werden können.

Die Erfindung wird anhand der Zeichnung näher erläutert. Hierbei zeigen:
- Figur 1: eine perspektivische Ansicht eines Verpreßkörpers mit mehreren Teilschnitten in einer Explosionsdarstellung;
- Figur 2: eine perspektivische Ansicht des Endes eines Verpreßkörpers;
- Figur 3: verschiedene Bewehrungselemente;
- Figur 4: A-H Verfahrensabläufe der Montage eines bewehrten Verpreßkörpers (A-D) und Montage eines Verpreßkörpers unter Verwendung von Bewehrungselementen mit Sollbruchstellen (E-H); und
- Figur 5: verschiedene Anwendungsbeispiele
A) Ringanker mit unterschiedlichen Querschnitten und ein in zwei Druckstufen verpreßbarer Minipfahl zur Abstützung ,
B) Rißüberbrückung, VerpreBkörper, eingelegt in einen Schlitz, und
C) einen Schnitt zu Fig. 5B.

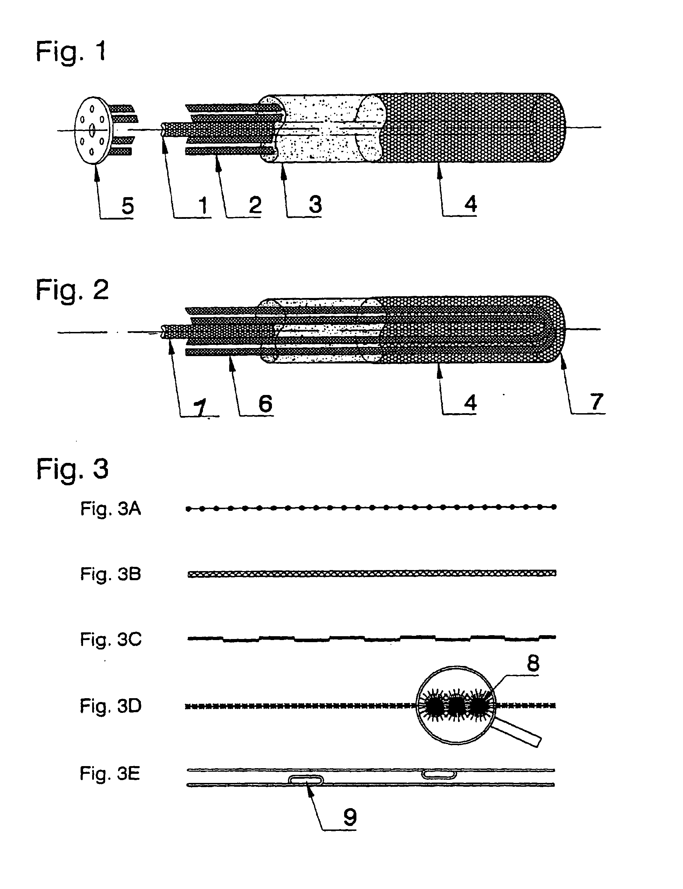

Die Figur 1 zeigt eine perspektivische Explosions-Darstellung eines Verpreßkörpers nach der Erfindung im gefüllten Zustand. Der innen liegende Füllschlauch 1 ist von Bewehrungselementen 2 umgeben, welche aus Stangen, Drähten, Rohre oder aus Zerrblechen bestehen können. Die Bewehrungselemente 2 bestehen im vorliegenden Ausführungsbeispiel aus Stangen oder Stäbe, welche jeweils geringfügig kürzer als die Gesamtlänge des verpreßkörpers sind oder auch aus hier nicht näher dargestellten Teilstücken bestehen können. Die Länge und der Querschnitt der Bewehrungselemente 2 werden an der Baustelle aufgrund der ermittelten Daten festgelegt. Hier erfolgt auch die Montage des gesamten Verpreßkörpers. Ein Gewebestrumpf 4, welcher am Fußende des Verpreßkörpers geschlossen ist, umgibt den gesamten Körper. Der innen liegende Füllschlauch 1 ist entsprechend kürzer, so daß der durch den Füllschlauch 1 eingeführte Mörtel am Fußende des Verpreßkörpers den Füllschlauch verläßt und entlang der inneren Wandung des Gewebestrumpfes zum Kopf des Verpreßkörpers geführt wird, bis er dort austritt, womit das Ende der Verpressung des Verpreßkörpers angezeigt wird. Um eine gleichmäßige bzw. vorbestimmte Anordnung und Lage der Bewehrungselemente zu garantieren, können diese an der äußeren Wandung des inneren Gewebestrumpfes befestigt sein. Die Befestigungsmittel können aus dem gleichen Material wie der Gewebestrumpf bestehen, beispielsweise aus Metallschlaufen, in die die Bewehrungselemente eingeführt werden. Am Kopfteil des Verpreßkörpers sind bei diesem dargestellten Ausführungsbeispiel die Bewehrungselemente 2 mit einer Endplatte 5 verbunden. Hierdurch wird im Eingangsbereich einmal die Lage der Bewehrungselemente fixiert und zum anderen lassen sich Schwingungsenergien übertragen, um den Montagevorgang zu erleichtern und die Verteilung und Verfestigung des Mörtels zu gewährleisten. Für die Gewebestrümpfe lassen sich alle bekannten Fadenmaterialien verwenden, jedoch auch Metallgewirke. Der Gewebeinnen- und der Gewebeaußenschlauch können auch aus unterschiedlichen Materialien bestehen. Desgleichen kann der außen liegende Gewebestrumpf elastischer ausgebildet sein als der Füllschlauch. Damit ist beispielsweise sichergestellt, daß der Füllschlauch seine Transportfunktion voll erfüllt, während der Gewebestrumpf sich den Unebenheiten seiner Umgebung gut anpaßt und somit beispielsweise sein Bohrloch voll ausfüllt, so daß auch ein Übergang der Spannungen oder Lasten vom Bauwerk zum Verpreßkörper gewährleistet ist.

Die Figur 2 zeigt ein abgewandeltes Ausführungsbeispiel nach Figur 1. Hierbei sind die Bewehrungselemente 6 in Form von Drähten, Stäben oder Stangen ausgebildet und an einem Ende 7 U-förmig gebogen. Sie erstrecken sich über die gesamte Länge des Verpreßkörpers.

Die Figur 3 zeigt verschiedene Ausführungsformen der Bewehrungselemente. So zeigt die Figur 3a eine verformte Stange. Die Verformungen können abschnittsweise oder auch über ihre gesamte Länge vorgesehen sein.

Die Figur 3b zeigt ein Zerrblech in Form eines schmalen Streifens.
Die Figur 3b stellt ein gewelltes Rohr oder eine gewellte Stange dar.
Die Figur 3d zeigt verdrillte Drähte in die Stahlwolle 8 eingedrillt werden kann. Hierdurch tritt eine intensive und verzahnte Verbindung mit dem eingepreßten Mörtel auf, so daß Kräfte aus dem Bauwerk vom VerpreBkörper einwandfrei aufgenommen und übertragen werden können.

Die Figur 3e gibt einen glatten Stahl mit einer Bewehrungsschlaufe 9 zur besseren Haftung wieder.

Die unter Figur 3a bis 3e dargestellten Bewehrungselemente lassen sich in allen Kombinationen je nach Aufgabenstellung einsetzen.

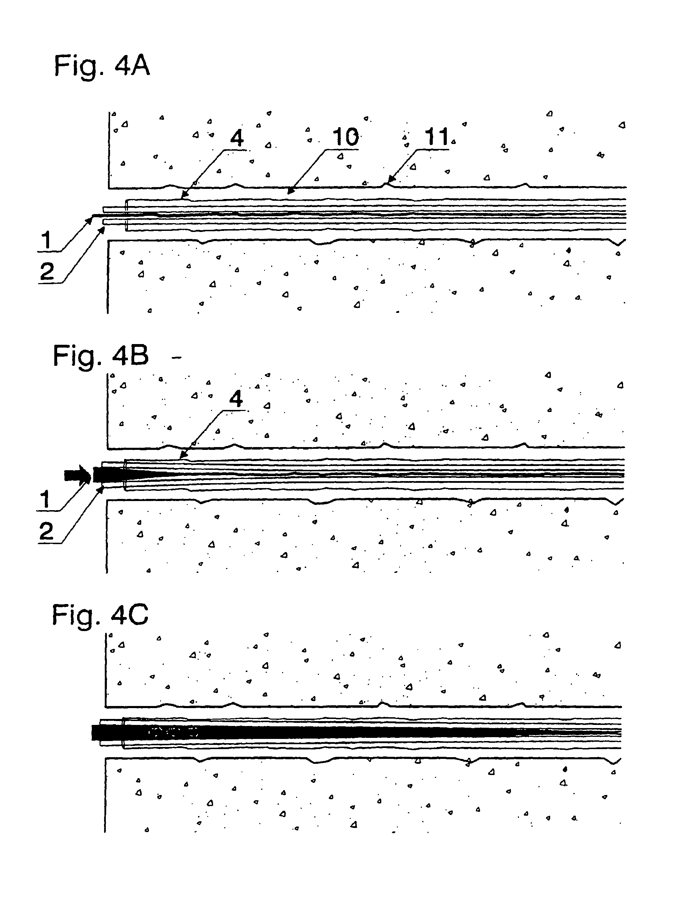

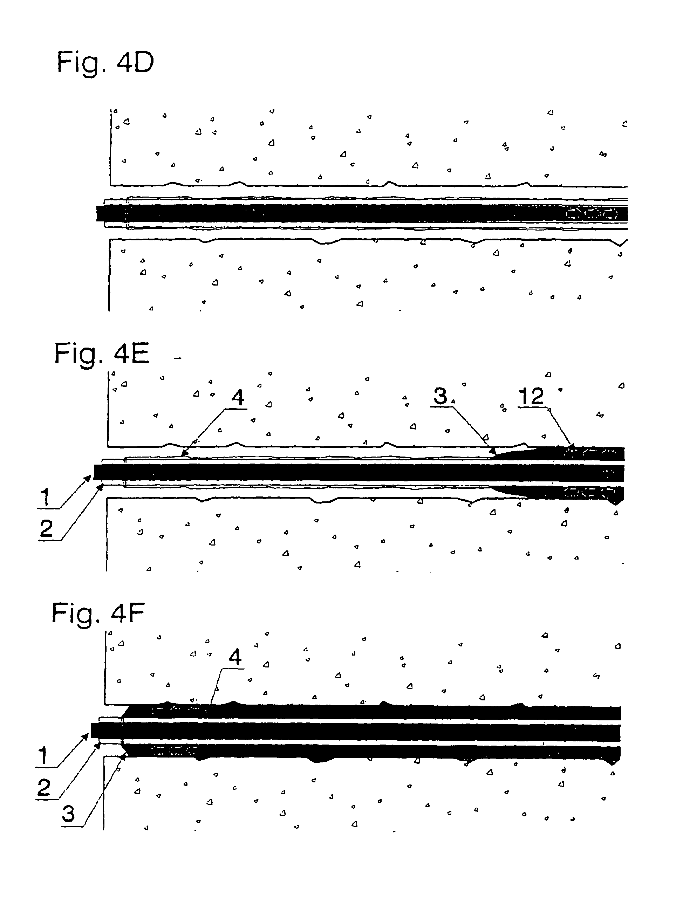

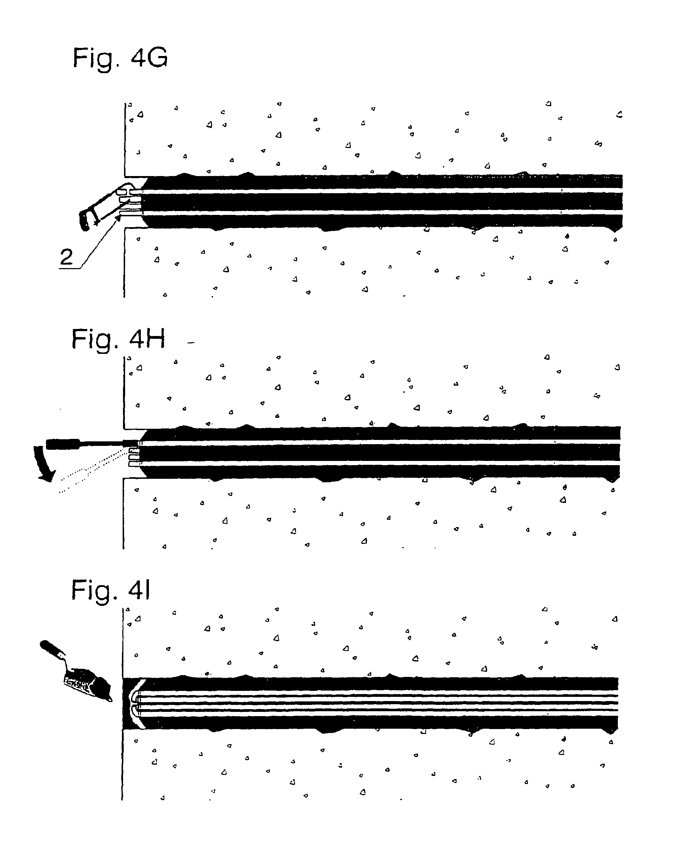

Die Figuren 4 A bis D zeigen den Injektionsvorgang in einzelnen Phasen.

Nach Figur 4A befindet sich im Bauwerk 11 eine Bohrung 10, welche durch einen Verpreßkörper nach der Erfindung ausgefüllt werden soll, um beispielsweise Kräfte aus Spannungsfeldern umzulagern. Aufgrund dieser Aufgabenstellung wird der hierfür günstigste verpreßkörper bestimmt, vor Ort werden die Bewehrungselemente in der Art, der Größe und ihrer Anzahl festgelegt und in das Bohrloch 10 eingeführt. Sodann erfolgt die Füllung mit Mörtel, wie in Figur 4B ersichtlich ist. Hierbei wird der innere Füllschlauch 1 bis in seine normale Größe aufgebläht. Damit nehmen auch die Bewehrungselemente 2 ihre endgültige Lage und vorgegebene Position ein. Es ist damit sichergestellt, daß auch eine vorgegebene Verteilung der Bewehrungselemente eingehalten wird.

Hat der injizierte Mörtel das Ende des Füllschlauchs 1 erreicht, tritt er aus seinem offenen Ende aus und wird vom außen liegenden Gewebestrumpf 4 in die Gegenrichtung gelenkt, wie durch die Pfeile 12 (Fig. 4E) angedeutet ist, bis er den Eingang wieder erreicht hat, wie aus Figur 4F ersichtlich ist. Da der außen liegende Gewebestrumpf eine ausreichende Elastizität aufweist, wird das Bohrloch vollständig ausgefüllt und das Gewebe legt sich stramm an die Bohrlochwandung. Hat der Gewebestrumpf seine volle Ausdehnung erreicht und sind im Bohrloch noch Unebenheiten vorhanden, in die das Gewebe sich nicht ausdehnen kann, so kann auch Mörtel durch das Gewebe des Strumpfes dringen und die Unebenheiten ausfüllen. Auch dort auftretende Kräfte lassen sich somit vom VerpreBkörper gut aufnehmen und verteilen sowie übertragen.

Die Figuren 4 E bis H zeigen die Endmontage eines Verpreßkörpers 13, der sich bereits im mit Mörtel gefüllten Zustand in einem Bohrloch 10 befindet und dessen Bewehrungselemente 2 jeweils an ihrem Ende eine Sollbruchstelle 14 aufweisen. Dadurch können die aus dem Bohrloch 10 herausragenden Bewehrungselemente 2 mit einem einfachen Werkzeug 15 getestet und abgebrochen und mit einem weiteren Werkzeug 16 (s. Figur 4G) ineinander verbogen werden, so daß eine Ausfüllung und ein Verschluß des Bohrloches einen ausreichenden Halt und eine Verbindung mit dem Verpreßkörper bekommt (s. Figur 4H).

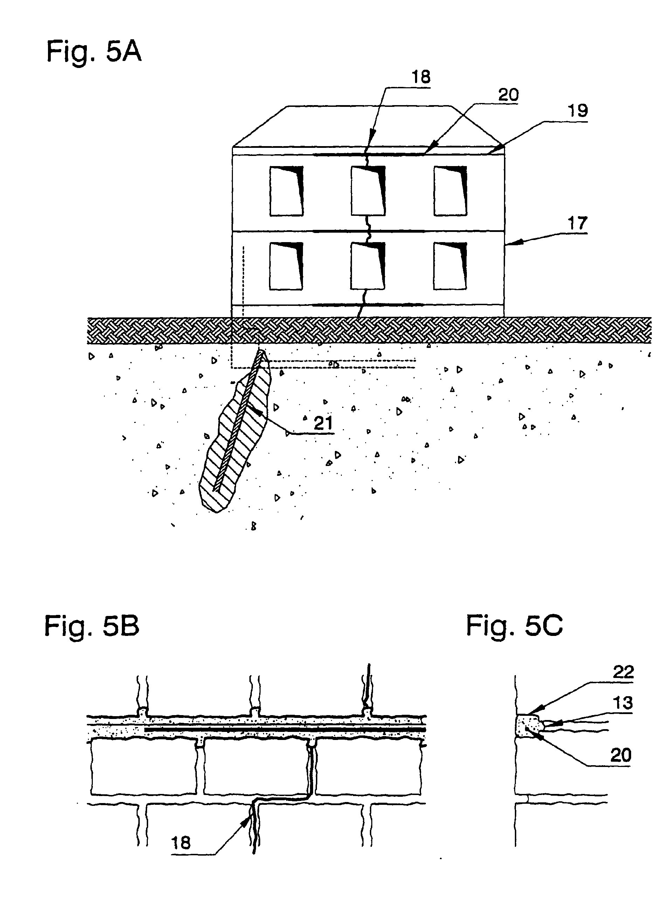

Die Figur 5 A und B zeigt weitere Anwendungsbeispiele der vorliegenden Erfindung.

Hierbei weist ein Gebäude 17 vertikal verlaufende Setzungsrisse 18 auf, deren Spannungen mit Hilfe der Verpreßkörper 13 aufgenommen und verteilt werden sollen. Hierzu wird der Verpreßkörper 13 als Ringanker 19 mit unterschiedlichen Bewehrungselementen aufgebaut. So ist der Ringanker 19 im Bereich der Risse 18 verstärkt ausgebildet, während die übrigen Bereiche des Ankers eine geringere Bewehrung aufweisen.

In dem aufgeführten Beispiel sind die Risse 18 des Gebäudes 17 durch einen unterschiedlichen Untergrund entstanden. Während die rechte Seite des Hauses auf sicherem Untergrund ruht, sind im linken Teil Bodensenkungen aufgetreten, die eine Stabilisierung erforderlich machen. Hierzu wird ebenfalls der Verpreßkörper nach der Erfindung eingesetzt. Der nach der Füllung des Verpreßkörpers zurückfließende Mörtel wird durch eine Ringplatte 5 am Kopfteil an seinem Austritt gehindert und mit einer zweiten höheren Druckstufe von beispielsweise 10 bar wird weiterer Mörtel injiziert, so daß der außen liegende Gewebestreumpf sich weiter ausdehnt und somit den Untergrund verdichtet und die Pfahlgründung verbessert. Nach der Erfindung weist der außen liegende Gewebestrumpf entsprechend der Bodenfestigkeit unterschiedliche Ausdehnungsradien entlang seiner Längsachse auf. So kann beispielsweise der äußere Mantel in seinem unteren Teil eine Birnenform aufweisen, so daß sich diese Formgebung besonders für Pfähle und Pfahlgründungen eignet.

Die Figur 5 B zeigt eine vergrößerte Ansicht eines Mauerwerks, das von einem senkrechten Riss 18 durchzogen ist. Die Figur 5 C zeigt einen Schnitt dazu. Im Bereich des Risses 18 ist der Injektionsanker 13 verstärkt ausgebildet, während der übrige Bereich des Ringankers mit einer Basis-Bewehrung 22 ausgerüstet ist.

Ein weiterer Anwendungsbereich ergibt sich aus der Temperaturunempf indlichkeit des Edelstahls der Bewehrung, der mineralischen Mörtelfüllung und der Stahlbestrumpfung. Hier sind insbesondere zu benennen: der Industrieofenbau, der Schornsteinbau und der Einsatz an Brandwänden.

Mit der vorliegenden Erfindung wird ein Verpreßkörper offenbart, welcher eine große Anwendungspalette im Hoch- und Tiefbau aufweist, die nicht vollständig aufgeführt werden kann.

Der große Vorteil der Erfindung besteht jedoch darin, daß der Verpreßkörper vor Ort, d.h. unmittelbar auf der Baustelle den geforderten Bedingungen maximal angepaßt werden kann, wobei eine sehr große Variabilität gegeben ist.

### Zusammenstellung der Bezugszeichen

- 1: zentralliegender Füllschlauch
- 2: Bewehrungselemente
- 3: Mörtelfüllung
- 4: äußerer Gewebestrumpf
- 5: Endplatte
- 6: U-förmige Bewehrungselemente
- 7: Ende des Verpreßkörpers
- 8: verdrillte Stahlwolle
- 9: eine Bewehrungsschlaufe
- 10: Bohrloch
- 11: Bauwerk
- 12: Pfeil, Rücklauf des injizierten Mörtels
- 13: Verpreßkörper
- 14: Sollbruchstelle eines Bewehrungselements 2
- 15: Werkzeug
- 16: Werkzeug
- 17: Gebäude
- 18: Risse
- 19: Verpreßkörper als Ringanker
- 20: Verpreßankerverstärkung im Bereich der Risse
- 21: Minipfahl in zwei Druckstufen
- 22: geringere Basis-Bewehrung

## Patentansprüche

1. Verpresskörper (13) zur Nachbewehrung von historischen Bauten und zur Verteilung von mechanischen Spannungen, der in Bohrungen (10) oder Schlitze oder dergleichen Öffnungen eingesetzt ist, mit einem zentral angeordneten, aus einem Gewebe bestehenden und an beiden Seiten offenen Füllschlauch (1), mindestens einem den Füllschlauch (1) umgebenden Gewebestrumpf (4) und einer Mörtelfüllung (3) sowie einem oder mehreren als Draht und/oder Stange und/oder Rohr und/oder Zerrblechstreifen ausgeführten Bewehrungselement(en) (2), die vor Ort an die jeweiligen Bedingungen anpassbar ausgebildet sind und die zwischen dem Füllschlauch (1) und dem Gewebestrumpf (4) parallel zur Achse des Verpresskörpers (13) und zur Lagefixierung verbunden mit dem Füllschlauch (1) oder dem Gewebestrumpf (4) angeordnet sind.

2. Verpresskörper nach Anspruch 1, **dadurch gekennzeichnet, dass** der Füllschlauch (1) und der Gewebestrumpf (4) mindestens abschnittsweise als dehnungsfähiges Metallgewirk ausgebildet sind.

3. Verpresskörper nach Anspruch 1 oder 2, **dadurch gekennzeichnet, dass** der Füllschlauch (1) geringfügig kürzer als die Bewehrungselemente (2) ausgebildet ist.

4. Verpresskörper nach einem der vorhergehenden Ansprüche, **dadurch gekennzeichnet, dass** die Bewehrungselemente (2) U-förmig ausgebildet sind und die gebogenen Teile am Fuß der Verpresskörpers (13) angeordnet sind.

5. Verpresskörper nach einem der vorhergehenden Ansprüche, **dadurch gekennzeichnet, dass** die Bewehrungselemente (2) über mindestens einen Teil ihrer Länge verformt ausgebildet sind und untereinander unterschiedliche Längen aufweisen.

6. Verpresskörper nach einem der vorhergehenden Ansprüche, **dadurch gekennzeichnet, dass** jedes Bewehrungselement (2) oder eine Gruppe von Bewehrungselementen (2) an vorbestimmten Stellen über eine vorgegebene Länge zur Spannungsabtragung oder -umlagerung aus definierten Zonen in definierten Bereichen gewellt und/oder verdrillt sind und mit lastabtragender Glas- oder Stahlwolle verbunden sind.

7. Verpresskörper nach einem der vorhergehenden Ansprüche, **dadurch gekennzeichnet, dass** die Bewehrungselemente (2) mittels einer Klemmvorrichtung kraftschlüssig verklemmt oder eingespannt und damit spannbar befestigt sind, wobei die außerhalb der Bohrung (10) liegenden Bewehrungselemente (2) Sollbruchstellen (14) zur Ermittlung der aufbringbaren Mindestbelastung aufweisen.

8. Verpresskörper nach einem der vorhergehenden Ansprüche, **dadurch gekennzeichnet, dass** die Bewehrungselemente (2) am Kopf des Verpresskörpers mit einer Endplatte (5) oder einem Adapter verbunden sind, die/der mit einer Rüttelvorrichtung zur Übertragung von mechanischen Schwingungen auf die Bewehrungselemente (2) verbindbar ist.

9. Verpresskörper nach einem der vorhergehenden Ansprüche, **dadurch gekennzeichnet, dass** der Radius des Gewebestrumpfes (4) entlang seiner Längsachse unterschiedlich ist.

10. Verfahren zur Herstellung eines gemäß den Ansprüchen 1 bis 9 ausgebildeten Verpresskörpers, **dadurch gekennzeichnet, dass** entsprechend den ermittelten Werten der Zugkräfte, der zu verlagernden Spannungen oder abzutragenden Lasten und der örtlichen Lage und Ausdehnung der Spannungsfelder eine errechnete Anzahl und Stärke von Bewehrungselementen (2) entsprechend der Bohrlochtiefe und Schlitzgröße vor Ort auf Länge geschnitten und montiert wird und in die Bohrung/den Schlitz eingeführt und darin verpresst wird.

11. Verfahren nach Anspruch 10, **dadurch gekennzeichnet, dass** entsprechend der Lage und Größe der abzutragenden oder zu übertragenden Lastenfelder im Bauwerk die errechnete Anzahl Bewehrungselemente (2) mit Verformungen versehen und über die Gesamtanordnung von Bewehrungselementen (2) ein Gewebestrumpf (4) gezogen wird, der mit der äußeren Umrandung einer Endplatte (5) oder einem Endrohr spannbar verbunden wird, wobei der Rand einer in deren Zentrum befindlichen Bohrung mit dem Füllschlauch (1) verbunden wird.

## Claims

1. Grouted body (13) for the post-reinforcement of historic buildings and the distribution of mechanical stresses, to be inserted in drilled holes (10) or slots or similar openings, with a centrally arranged filling tube (1) open at both ends and at least one woven sleeve (4) and a mortar filling (3) enclosing this filling tube (1) and with at least one reinforcing element (2) in the form of a wire and/ or rod and/or tube and/or strain bar and/or threaded steel element arranged between the filling tube (1) and the woven sleeve (4) parallel to the grouted body (13) and attached to the filling tube (1) or the woven sleeve (4) to hold the position.

2. Grouted body in accordance with claim 1, **characterised in that** the filling tube (1) and/or the woven sleeve (4) are at least partly constructed as an expandable knitted metal sleeve.

3. Grouted body in accordance with claim 1 or 2, **characterised in that** the filling tube (1) is slightly shorter than the reinforcing elements (2)

4. Grouted body in accordance with one of the foregoing claims, **characterised in that** the reinforcing elements (2) are constructed in a U-form, the parts bent in a U form being arranged at the base or at one end of the grouted body (13).

5. Grouted body in accordance with one of the foregoing claims, **characterised in that** the reinforcing elements (2) are deformed over at least a part of their length and have different lengths.

6. Grouted body in accordance with one of the foregoing claims, **characterised in that** each reinforcing element (2) or a group of reinforcing elements (2) is deformed at predetermined places over a specified length to dissipate or redistribute stresses from specified zones in such a way that in specified areas the reinforcing elements (2) are undulated and/or twisted and connected to load-dissipating steel or fibreglass.

7. Grouted body in accordance with one of the foregoing claims, **characterised in that** the reinforcing elements (2) are positively clamped or fixed by means of a force-fit clamping device and thus securely attached and which reinforcing elements (2) outside the drilled hole (10) incorporate predetermined break points (14) to determine the minimum applicable load

8. Grouted body in accordance with one of the foregoing claims, **characterised in that** the reinforcing elements (2) at the tip of the grouted body are connected to an end plate (5) or an adapter which end plate is connectable to a vibrating device such that the mechanical vibrations generated are transmissible to the reinforcing elements (2).

9. Grouted body in accordance with one of the foregoing claims, **characterised in that** the radius of the woven sleeve (4) varies along the longitudinal axis of the grouted body

10. Process for manufacturing an injected or grouted body in accordance with claims 1 to 9, **characterised in that** according to the determined values of the tensile forces, the stresses to be displaced or loads to be dissipated the local position and extent of the stress fields a calculated number and thickness of reinforcing elements (2) is cut to length on site to suit the depth of the desired drilled hole or slot sizes and mounted, inserted and pressed into the hole or slots.

11. Process in accordance with claim 10, **characterised in that** according to the position and size of the load fields to be dissipated or transmitted in the structure, the calculated number of reinforcing elements (2) is deformed and a woven sleeve (4), which is tensibly connected to the outer edge of an end plate (5) or an end tube, in the centre of which is a hole, the edge of which is connected to the filling tube (1) or the inner woven tube, is drawn over the entire arrangement of reinforcing elements (2).

## Revendications

1. Corps de pression (13) pour l'armature de renforcement de bâtiments historiques et pour assurer la répartition de tensions mécaniques, utilisé dans des trous de forage ou des fentes ou des ouvertures similaires, comportant un tuyau de remplissage (1) disposé au centre, se composant de tissu et ouvert au niveau des deux extrémités, au moins un manchon en tissu (4) entourant le tuyau de remplissage (1) et un remplissage de mortier (3) ainsi qu'un ou plusieurs éléments d'armature (2) exécutés sous forme de fil métallique et/ou de barre et/ou de tube et/ou de bande de tôle de traction et/ou d'acier fileté, conçus de façon à s'adapter sur place à toutes les conditions et disposés entre le tuyau de remplissage (1) et le manchon de tissu (4) et parallèlement à l'axe du corps de pression (13) et fixés en étant connectés au tuyau de remplissage (1) ou au manchon de tissu (4.

2. Corps de pression selon la revendication 1, **caractérisé en ce que** le tuyau de remplissage (1) et le manchon de tissu (4) ont au moins par sections la configuration d'une structure métallique extensible.

3. Corps de pression selon les revendications 1 ou 2, **caractérisé en ce que** le tuyau de remplissage (1) a une longueur légèrement inférieure à celle des éléments d'armature (2.

4. Corps de pression selon l'une quelconque des revendications précédentes, **caractérisé en ce que** les éléments d'armature (2) ont une forme en U, leurs éléments recourbés étant disposés à la base du corps de pressage (13.

5. Corps de pression selon l'une quelconque des revendications précédentes, **caractérisé en ce que** les éléments d'armature (2) ont une configuration déformée sur au moins une partie de leur longueur et présentent entre eux des longueurs différentes.

6. Corps de pression selon l'une quelconque des revendications précédentes, **caractérisé en ce que** chaque élément d'armature (2) ou un groupe d'éléments d'armature (2) est ondulé et/ou torsadé à des endroits prédéfinis sur une longueur déterminée en vue de la transmission ou de l'amortissement de la tension à partir de zones définies de régions définies et sont reliés par de la laine de verre ou d'acier à amortissement de charge.

7. Corps de pression selon l'une quelconque des revendications précédentes, **caractérisé en ce que** les éléments d'armature (2) sont serrés ou fixés mécaniquement par l'intermédiaire d'un dispositif de serrage, assurant ainsi leur fixation par tension, les éléments d'armature (2) situés en dehors du trou de forage (10) présentant des points de rupture théoriques (14) en vue de la détermination de la charge minimale pouvant être appliquée.

8. Corps de pression selon l'une quelconque des revendications précédentes, **caractérisé en ce que** les éléments d'armature (2) sont reliés au niveau de la tête du corps de pression à une plaque d'extrémité (5) ou un adaptateur pouvant être relié(e) à un dispositif vibrant destiné à transmettre les vibrations mécaniques sur les éléments d'armature (2.

9. Corps de pression selon l'une quelconque des revendications précédentes, **caractérisé en ce que** le rayon du manchon de tissu (4) est différent le long de son axe longitudinal.

10. Procédé de production d'un corps de pression exécuté conformément aux revendications 1 à 9, **caractérisé en ce qu'**en fonction des valeurs déterminées des forces de traction, des tensions à transmettre ou des charges à amortir et de la position locale et de l'extension des champs de tension, un nombre calculé d'éléments d'armature (2) d'épaisseur déterminée est découpé à la longueur voulue et monté sur place en fonction de la profondeur des trous de forage et de la taille des fentes, est introduit dans le trou de forage/la fente et est pressé à l'intérieur.

11. Procédé selon la revendication 10, **caractérisé en ce qu'**en fonction de la position et de la taille des champs de charge à amortir ou à transmettre dans le bâtiment, le nombre calculé d'éléments d'armature (2) est pourvu de déformations, un manchon de tissu (4) est tiré sur la disposition d'éléments d'armature (2), celui-ci étant relié par tension à la bordure extérieure d'une plaque d'extrémité (5) ou d'un tube d'extrémité, la bordure d'un alésage situé au centre étant reliée au tuyau de remplissage (1.
